# EUROPEAN PATENT APPLICATION

(11) **EP 2 489 852 A1**
(43) Date of publication of application: **22.08.2012**
(21) Application number: 10854250.7
(22) Date of filing: 20.12.2010
(51) Int. Cl.: F02B 37/16, F01N 3/20, F01N 3/24, F02B 37/18, F02D 23/00

(54) **CONTROL DEVICE FOR INTERNAL COMBUSTION ENGINE EQUIPPED WITH SUPERCHARGER**

(71) Applicant: Toyota Jidosha Kabushiki Kaisha, Aichi 471-8571 (JP)
(72) Inventor: OTSUKA, Takayuki, Aichi 4718541 (JP)
(74) Representative: Kuhnen & Wacker
(86) International application number: PCT/JP2010/072927
(87) International publication number: WO 2012/086002

(57) **Abstract**

Disclosed is a control apparatus that is used for an internal combustion engine with a supercharger and capable of inhibiting a decrease in the temperature of an exhaust gas purification device under a low-temperature operating condition where the temperature of the exhaust gas purification device decreases.

The control apparatus includes a turbocharger (20) having a turbine (20b) that operates by exhaust energy and is installed in an exhaust passage (14); and the control apparatus includes a WGV (36) that opens and closes an exhaust bypass passage (34), which bypasses the turbine (20b). The degree of opening of the WGV (36) is controlled depending on whether a high turbine temperature condition where the temperature of exhaust gas at a downstream location is higher when it passes through the turbine (20b) than when it passes through the exhaust bypass passage (34), is established when a low-temperature operating condition is established to decrease the temperature of an exhaust purification catalyst (38).

## Description

### Technical Field

The present invention relates to a control apparatus for an internal combustion engine with a supercharger.

### Background Art

A conventional internal combustion engine with a turbocharger is disclosed, for instance, in Patent Document 1. This conventional internal combustion engine includes an exhaust bypass passage, which bypasses a turbine of the turbocharger, and a waste-gate valve, which selectively opens and closes the exhaust bypass passage. In a low-revolution-speed and low-load region, which includes an idling region, normally-closed control, which closes the waste gate valve, and normally-open control, which opens the waste-gate valve, are selectively performed in accordance with the operating state of the internal combustion engine.

### Citation List

### Patent Literature

Patent Document 1: Japanese Laid-open Patent Application Publication No. 2009-228486

### Summary of Invention

### Technical Problem

When a vehicle runs at a low speed, its internal combustion engine generally operates in a low output state. Therefore, its exhaust gas temperature decreases, thereby decreasing the temperature of an exhaust gas purification catalyst or other exhaust gas purification device disposed downstream of the turbine. Further, when exhaust gas passes through the turbine, heat exchange occurs between the exhaust gas and the turbine. Therefore, when the vehicle runs at a high speed to increase the exhaust gas temperature, the temperature of the turbine rises due to heat transferred from the exhaust gas. Consequently, when the vehicle switches from a high-speed operation to a low-speed operation, the turbine temperature does not immediately decrease due to the existence of thermal mass of the turbine. Hence, the turbine temperature may be higher than the temperature of the exhaust gas flowing into the turbine. As a result, a gas passing through the turbine may have a higher temperature than a gas passing through the exhaust bypass passage due to heat received from the turbine. If the waste gate valve is set to open in such a situation, a gas having a relatively low temperature is supplied to the exhaust gas purification device through the exhaust bypass passage. Therefore, if the vehicle runs at a low speed, the temperature of the exhaust gas purification device may be lower when the waste gate valve is open than when it is closed.

The present invention has been made to solve the above problem. An object of the present invention is to provide a control apparatus that is used for an internal combustion engine with a supercharger and capable of inhibiting a decrease in the temperature of an exhaust gas purification device under a low-temperature operating condition where the temperature of the exhaust gas purification device decreases.

### Solution to Problem

A first aspect of the present invention is a control apparatus for an internal combustion engine with a supercharger, the control apparatus comprising:
a turbocharger having a turbine that operates by exhaust energy and is installed in an exhaust passage;
an exhaust bypass passage that branches off from the exhaust passage at an upstream location of the turbine and merges into the exhaust passage at a downstream location of the turbine;
a waste gate valve capable of selectively opening and closing the exhaust bypass passage;
an exhaust gas purification device that is disposed in the exhaust passage at a downstream location of the downstream location;
low-temperature operating condition determination means for determining whether a low-temperature operating condition is established to decrease the temperature of the exhaust gas purification device;
high turbine temperature condition determination means for determining whether a high turbine temperature condition is established so that the temperature of exhaust gas is higher at the downstream location when the exhaust gas passes through the turbine than when the exhaust gas passes through the exhaust bypass passage; and
waste gate valve opening control means for controlling the degree of opening of the waste gate valve depending on whether the high turbine temperature condition is established when the low-temperature operating condition is established.

A second aspect of the present invention is the control apparatus for the internal combustion engine with the supercharger according to the first aspect of the present invention,
wherein the waste gate valve opening control means closes the waste gate valve when the low-temperature operating condition and the high turbine temperature condition are established, and opens the waste gate valve when the low-temperature operating condition is established and the high turbine temperature condition is not established.

A third aspect of the present invention is the control apparatus for the internal combustion engine with the supercharger according to the first aspect of the present invention,
wherein the waste gate valve opening control means basically performs normally-open control to open the waste gate valve under a normal condition and close the waste gate valve when a high output request is issued to the internal combustion engine, and closes the waste gate valve when the low-temperature operating condition and the high turbine temperature condition are established.

A fourth aspect of the present invention is the control apparatus for the internal combustion engine with the supercharger according to any one of the first to third aspects of the present invention,
wherein, when the speed of a vehicle in which the internal combustion engine is mounted is lower than a predetermined speed reference value, the low-temperature operating condition determination means determines that the low-temperature operating condition is established.

A fifth aspect of the present invention is the control apparatus for the internal combustion engine with the supercharger according to any one of the first to third aspects of the present invention,
wherein the exhaust gas purification device is an exhaust gas purification catalyst, and
wherein, when the temperature of the exhaust purification catalyst is not higher than a predetermined activation temperature, the low-temperature operating condition determination means determines that the low-temperature operating condition is established.

### Advantageous Effects of Invention

According to the first aspect of the present invention, when the low-temperature operating condition is established, the degree of opening of the waste gate valve is controlled depending on whether the high turbine temperature condition is established. Therefore, when the low-temperfature operating condition is established, an exhaust gas having a relatively high temperature can be supplied toward the exhaust gas purification device in accordance with the temperature of the turbine. This makes it possible to inhibit a decrease in the temperature of the exhaust gas purification device.

According to the second aspect of the present invention, when the low-temperature operating condition and the high turbine temperature condition are established, the waste-gate valve closes to raise the temperature of the exhaust gas when it passes through the turbine heated to a high temperature. This makes it possible to raise the temperature of the exhaust gas flowing into the exhaust gas purification device. Further, when the low-temperature operating condition is established and the high turbine temperature condition is not established, the waste-gate valve opens to prevent the exhaust gas from losing its heat due to the turbine having a relatively low temperature. Consequently, the present invention can inhibit a decrease in the temperature of the exhaust gas purification device.

According to the third aspect of the present invention, when the low-temperature operating condition and the high turbine temperature condition are established, the waste gate valve closes to raise the temperature of the exhaust gas when it passes through the turbine heated to a high temperature. This makes it possible to raise the temperature of the exhaust gas flowing into the exhaust gas purification device. Therefore, when the normally-open control is performed as a basic control scheme, the present invention can inhibit a decrease in the temperature of the exhaust gas purification device.

According to the fourth aspect of the present invention, when the employed configuration determines that the low-temperature operating condition is established when the speed of the vehicle in which the internal combustion engine is mounted is lower than the predetermined speed reference value, the present invention can inhibit a decrease in the temperature of the exhaust gas purification device.

According to the fifth aspect of the present invention, when the employed configuration determines that the low-temperature operating condition is established when the temperature of the exhaust gas purification catalyst is not higher than the predetermined activation temperature, the present invention can inhibit a decrease in the temperature of the exhaust gas purification device.

### Brief Description of Drawings

FIG. 1 is a schematic diagram illustrating the system configuration of an internal combustion engine according to a first embodiment of the present invention;
FIG. 2 is a diagram illustrating opening/closing control of the WGV that is performed in accordance with an operating region of the internal combustion engine 10;
FIG. 3 is a flowchart of a routine that is executed in the first embodiment of the present invention; and
FIG. 4 is a flowchart of a routine that is executed in the second embodiment of the present invention.

### Description of Embodiments

### First Embodiment

### [Description of System Configuration]

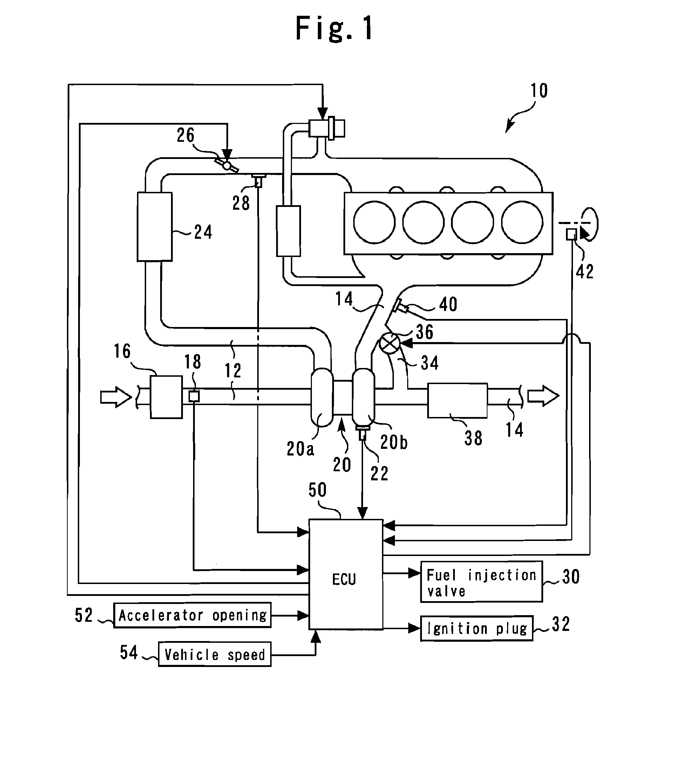

FIG. 1 is a schematic diagram illustrating the system configuration of an internal combustion engine 10 according to a first embodiment of the present invention. The system according to the first embodiment includes the internal combustion engine 10 (it is assumed that a spark-ignition gasoline engine is used as the internal combustion engine). Each cylinder of the internal combustion engine 10 is in communication with an intake passage 12 and an exhaust passage 14.

An air cleaner 16 is mounted near the inlet of the intake passage 12. An air flow meter 18 is disposed near the downstream end of the air cleaner 16 to output a signal in accordance with the flow rate of air taken into the intake passage 12. A compressor 20a of a turbocharger 20 is installed downstream of the air flow meter 18. The compressor 20a is integrally coupled through a connecting shaft to a turbine 20b, which is disposed in the exhaust passage 14. A turbine temperature sensor 22 is attached to the turbocharger 20 to acquire the temperature of the turbine 20b.

An intercooler 24 is disposed downstream of the compressor 20a to cool compressed air. An electronically-controlled throttle valve 26 is disposed downstream of the intercooler 24. An intake pressure sensor 28 is disposed downstream of the throttle valve 26 to detect intake pressure (boost pressure). Each cylinder of the internal combustion engine 10 is provided with a fuel injection valve 30, which injects fuel into an intake port. Each cylinder of the internal combustion engine 10 is also provided with an ignition plug 32, which ignites an air-fuel mixture.

The exhaust passage 14 is connected to an exhaust bypass passage 34, which branches off from the exhaust passage 14 at an upstream location of the turbine 20b and merges into the exhaust passage 14 at a downstream location of the turbine 20b. A waste gate valve (WGV) 36 is disposed in the middle of the exhaust bypass passage 34 to selectively open and close the exhaust bypass passage 34. It is assumed that the WGV 36 can be adjusted to an arbitrary opening by a pressure-regulating or motor-driven actuator (not shown).

An exhaust gas purification catalyst (hereinafter simply referred to as the "catalyst") 38 for purifying the exhaust gas is installed in the exhaust passage 14 that is positioned downstream of a joint to the exhaust bypass passage 34 at the downstream of the turbine 20b. An exhaust gas temperature sensor 40 for acquiring the temperature of the exhaust gas discharged from the cylinders is installed in the exhaust passage 14 that is positioned upstream of a joint to the exhaust bypass passage 34 at the upstream of the turbine 20b. A crank angle sensor 42 for detecting the engine speed is installed near a crankshaft.

The system shown in FIG. 1 also includes an ECU (electronic control unit) 50. An input section of the ECU 50 is connected not only to the aforementioned air flow meter 18, intake pressure sensor 28, turbine temperature sensor 22, exhaust gas temperature sensor 40, and crank angle sensor 42, but also to various sensors for detecting the operating state of the internal combustion engine 10, such as an accelerator opening sensor 52 for detecting the amount of depression of an accelerator pedal mounted in a vehicle having the internal combustion engine 10 (the degree of accelerator opening) and a vehicle speed sensor 54 for detecting the speed of the vehicle. An output section of the ECU 50 is connected to the aforementioned throttle valve 26, fuel injection valve 30, ignition plug 32, WGV 36, and various other actuators for controlling the operating state of the internal combustion engine 10. In accordance with the outputs of the above sensors and with predetermined programs, the ECU 50 operates the actuators to control the operating state of the internal combustion engine 10.

### [Control in First Embodiment]

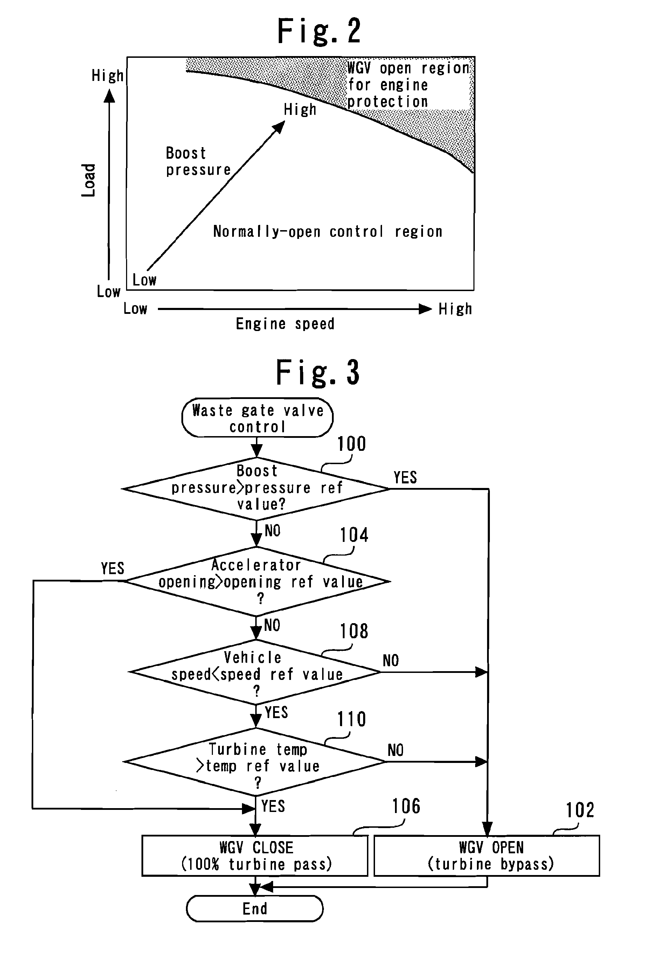

FIG. 2 is a diagram illustrating opening/closing control of the WGV 36 that is performed in accordance with an operating region of the internal combustion engine 10.
As shown in FIG. 2, the boost pressure of internal combustion engines with a turbocharger increases with an increase in load (torque) and in engine speed. Conventional internal combustion engines with a turbocharger that place emphasis on output generally include a waste gate valve that is opened and closed by a positive-pressure diaphragm. Normally-closed control is performed over the waste-gate valve. More specifically, the waste gate valve closes when a normal operation is performed, and opens to provide engine protection when the boost pressure is not lower than a predetermined value.

Meanwhile, in the system according to the present embodiment, normally-open control is performed as shown in FIG. 2. More specifically, in a region other than a high-revolution-speed, high-load region in which the WGV 36 opens to provide engine protection, the WGV 36 opens to a predetermined degree in accordance with the operating state under normal condition where a high output is not requested, and closes when a high output is requested. When such normally-open control is performed, the WGV 36 opens under normal condition to decrease exhaust gas pressure. As a result, exhaust loss can be reduced. Further, as the WGV 36 opens under normal condition, the degree of throttle opening required to acquire the same torque is greater than when the WGV 36 is closed. This makes it possible to reduce pump loss. Hence, the fuel efficiency of the internal combustion engine 10 can be enhanced.

While the vehicle is running at a low speed, the internal combustion engine 10 generally operates in a low output state. Therefore, exhaust gas temperature decreases to decrease the temperature of the catalyst 38, which is disposed downstream of the turbine 20b. Further, when the exhaust gas passes through the turbine 20b, heat exchange occurs between the exhaust gas and the turbine 20b. Therefore, when the vehicle runs at a high speed to increase the exhaust gas temperature, the temperature of the turbine 20b rises due to heat transferred from the exhaust gas. Consequently, when the vehicle switches from a high-speed operation to a low-speed operation, the temperature of the turbine 20b does not immediately decrease due to the existence of thermal mass of the turbine 20b. Hence, the temperature of the turbine 20b may be higher than the temperature of the exhaust gas flowing into the turbine 20b. As a result, a gas passing through the turbine 20b may have a higher temperature than a gas passing through the exhaust bypass passage 34 due to heat received from the turbine 20b. If the WGV 36 is set to open due to normally-open control in such a situation, a gas having a relatively low temperature is supplied to the catalyst 38 through the exhaust bypass passage 34. Therefore, if the vehicle runs at a low speed, the temperature of the catalyst 38 may be lower when the WGV 36 is open than when it is closed.

In view of the above circumstances, the present embodiment discriminates whether the vehicle speed is lower than a predetermined speed reference value in order to determine whether a low-temperature operating condition is established. Under the low-temperature operating condition, the temperature of the catalyst 38 decreases. Further, the present embodiment discriminates whether the temperature of the turbine 20b is higher than a predetermined temperature reference value in order to determine whether a high turbine temperature condition is established. Under the high turbine temperature condition, the temperature of the exhaust gas is higher at a downstream location (a merging point between the exhaust passage 14 and the exhaust bypass passage 34 at the downstream of the turbine 20b) when the exhaust gas passes through the turbine 20b than when the exhaust gas passes through the exhaust bypass passage 34. On that basis, when the low-temperature operating condition is established, the present embodiment controls the degree of opening of the WGV 36 (the opening and closing of the WGV 36 in the present example) depending on whether the high turbine temperature condition is established.

More specifically, the present embodiment closes (fully closes) the WGV 36 if the low-temperature operating condition and the high turbine temperature condition are both established, and opens the WGV 36 if the low-temperature operating condition is established and the high turbine temperature condition is not established.

FIG. 3 is a flowchart illustrating a control routine that is executed by the ECU 50 in the first embodiment to implement the above functionality. It is noted that the routine is executed repeatedly at predetermined control intervals.
First of all, in the routine shown in FIG. 3, it is determined whether the boost pressure detected by the intake pressure sensor 28 is higher than a predetermined pressure reference value (step 100). The pressure reference value used in step 100 is predetermined as a boost pressure threshold value for determining whether the operating region of the internal combustion engine 10 is within a WGV open region (see FIG. 2) for engine protection in order to avoid excessive boost pressure.

If the determination result obtained in step 100 indicates that the boost pressure is higher than the pressure reference value, that is, if the current operating region is determined to be within the WGV open region for engine protection, the WGV 36 is opened (step 102). The exhaust gas then bypasses the turbine 20b by using the exhaust bypass passage 34. This makes it possible to avoid an excessive boost pressure.

If, on the other hand, the determination result obtained in step 100 indicates that the boost pressure is not higher than the pressure reference value, that is, if the current operating region is determined to be within a normally-open control region (see FIG. 2) other than the WGV open region for engine protection, it is determined whether the accelerator opening detected by the accelerator opening sensor 52 is greater than a predetermined opening reference value (step 104). The opening reference value used in step 104 is predetermined as an accelerator opening threshold value for determining whether a high output request is generated.

If the determination result obtained in step 104 indicates that the accelerator opening is greater than the opening reference value, that is, if a high output request is determined to be generated by a driver of the vehicle, the WGV 36 is closed (step 106). The entire exhaust gas then passes through the turbine 20b to properly increase the boost pressure.

If, on the other hand, the determination result obtained in step 104 indicates that the accelerator opening is not greater than the opening reference value, that is, if a high output request is determined to be not generated so that control should be basically performed to open the WGV 36 for fuel efficiency enhancement, it is determined whether the vehicle speed is lower than the predetermined speed reference value (step 108). The speed reference value used in step 108 is predetermined as a vehicle speed threshold value for determining whether the vehicle is running at a low speed to establish the aforementioned low-temperature operating condition where the temperature of the catalyst 38 decreases.

If the determination result obtained in step 108 indicates that the vehicle speed is not lower than the speed reference value, the WGV 36 is opened to give priority to fuel efficiency (step 102). If, on the other hand, the determination result obtained in step 108 indicates that the vehicle speed is lower than the speed reference value, that is, if the vehicle is determined to be running at a low speed to establish the low-temperature operating condition, it is determined whether the temperature of the turbine 20b is higher than a predetermined temperature reference value (step 110). The temperature reference value used in step 110 is predetermined as a turbine 20b temperature threshold value for determining whether the aforementioned high turbine temperature condition is established.

If the determination result obtained in step 110 indicates that the temperature of the turbine 20b is higher than the temperature reference value, that is, if the high turbine temperature condition is determined to be established, the WGV 36 is closed (step 106). If, on the other hand, the determination result obtained in step 110 indicates that the temperature of the turbine 20b is not higher than the temperature reference value, that is, if the high turbine temperature condition is determined to be not established, the WGV 36 is opened (step 102).

In the system that performs the normally-open control for fuel efficiency enhancement in a situation where the accelerator opening is not greater than the opening reference value, the above-described routine shown in FIG. 3 closes the WGV 36 when the vehicle speed is lower than the speed reference value (the low-temperature operating condition is established) and the temperature of the turbine 20b is higher than the temperature reference value (the high turbine temperature condition is established). This ensures that the temperature of the exhaust gas rises when it passes through the turbine 20b heated to a high temperature. Therefore, the temperature of the exhaust gas flowing into the catalyst 38 can be raised. Consequently, when the vehicle is running at a low speed to establish the low-temperature operating condition, it is possible to inhibit a decrease in the temperature of the catalyst 38.

Further, the above-described routine opens the WGV 36 to prevent the exhaust gas from losing its heat due to the turbine 20b having a relatively low temperature when the vehicle speed is lower than the speed reference value (the low-temperature operating condition is established) and the temperature of the turbine 20b is not higher than the temperature reference value (the high turbine temperature condition is not established). Consequently, a decrease in the temperature of the catalyst 38 can also be inhibited in the above case.

As described above, performing control according to the present embodiment makes it possible to supply the exhaust gas having a relatively high temperature to the catalyst 38 in accordance with the temperature of the turbine 20b while the vehicle is running at a low speed to establish the low-temperature operating condition where the temperature of the catalyst 38 decreases. Therefore, the temperature of the catalyst 38 can be kept as high as possible to maintain its exhaust gas purification capability.

It is noted that in the first embodiment, which has been described above, the exhaust gas purification catalyst 38 corresponds to the "exhaust gas purification device" according to the first aspect of the present invention. Further, the "low-temperature operating condition determination means" according to the first aspect of the present invention is implemented when the ECU 50 performs step 108; the "high turbine temperature condition determination means" according to the first aspect of the present invention is implemented when the ECU 50 performs step 110; and the "WGV opening control means" according to the first aspect of the present invention is implemented when the ECU 50 performs a series of steps 102, 106, 108, and 110.

### Second Embodiment

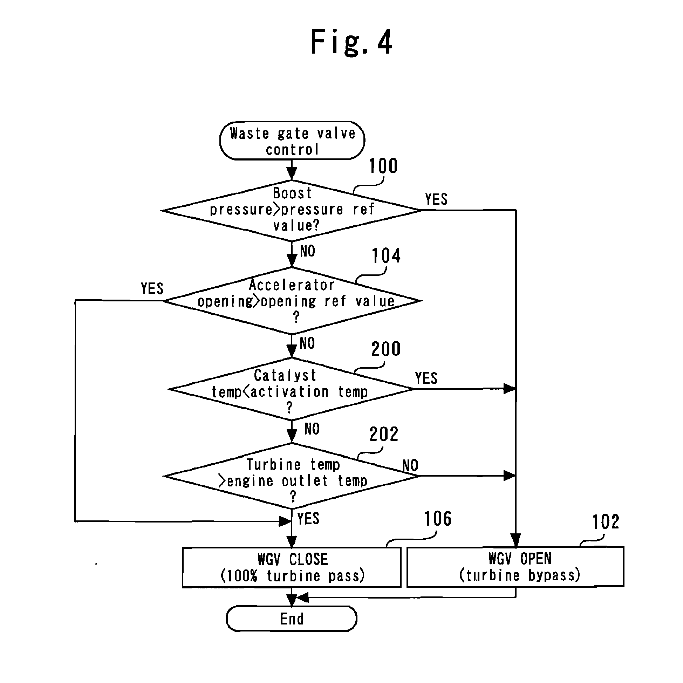

A second embodiment of the present invention will now be described with reference to FIG. 4.
The system according to the second embodiment can be implemented when the hardware configuration shown in FIG. 1 is employed to let the ECU 50 execute a later-described routine shown in FIG. 4 in place of the routine shown in FIG. 3.

In the first embodiment, which have been described earlier, the system discriminates whether the vehicle speed is lower than the speed reference value to determine whether the low-temperature operating condition where the temperature of the catalyst 38 (exhaust gas purification device) decreases is established. Meanwhile, the system according to the second embodiment discriminates whether the temperature of the catalyst 38 is not higher than a predetermined activation temperature to determine whether the low-temperature operating condition is established. Further, the system according to the second embodiment discriminates whether the temperature of the turbine 20b is higher than the temperature of the exhaust gas discharged from a cylinder (the exhaust gas at a location upstream of the turbine 20b) to determine whether the high turbine temperature condition is established.

FIG. 4 is a flowchart illustrating a control routine that is executed by the ECU 50 in the second embodiment. It is noted that in FIG. 4, the same steps as those shown in FIG. 3 in the first embodiment are identified by the same reference numerals and descriptions therefor will be omitted or simplified.

In the routine shown in FIG. 4, if the determination result obtained in step 104 indicates that the accelerator opening is not greater than the opening reference value, it is then determined whether the temperature of the catalyst 38 is higher than a predetermined activation temperature (step 200). It is noted that the temperature of the catalyst 38, for example, can be estimated from an operating history of the internal combustion engine 10 or may be acquired from a separately installed temperature sensor.

If the determination result obtained in step 200 indicates that the temperature of the catalyst 38 is higher than the activation temperature, the WGV 36 is opened to give priority to fuel efficiency (step 102). If, on the other hand, the determination result indicates that the temperature of the catalyst 38 is not higher than the activation temperature, it is determined whether the temperature of the turbine 20b is higher than the temperature of the exhaust gas that is detected by the exhaust gas temperature sensor 40 (engine outlet gas temperature) (step 202).

If the determination result obtained in step 202 indicates that the temperature of the turbine 20b is higher than the engine outlet gas temperature, the WGV 36 is closed (step 106). If, on the other hand, the determination result indicates that the temperature of the turbine 20b is not higher than the engine outlet gas temperature, the WGV 36 is opened (step 102).

The system performs the normally-open control for fuel efficiency enhancement in a situation where the accelerator opening is not greater than the opening reference value. In such system, the above-described routine shown in FIG. 4 closes the WGV 36 when the temperature of the catalyst 38 is not higher than the activation temperature (the low-temperature operating condition is established) and the temperature of the turbine 20b is higher than the engine outlet gas temperature (the high turbine temperature condition is established). Therefore, the exhaust gas whose temperature is raised by the heat received from the turbine 20b can be supplied to the catalyst 38. This makes it possible to inhibit a decrease in the temperature of the catalyst 38.

Further, the above-described routine opens the WGV 36 when the temperature of the catalyst 38 is not higher than the activation temperature (the low-temperature operating condition is established) and the temperature of the turbine 20b is not higher than the engine outlet gas temperature (the high turbine temperature condition is not established). This makes it possible to prevent the exhaust gas from losing its heat due to the turbine 20b having a relatively low temperature. Consequently, a decrease in the temperature of the catalyst 38 can also be inhibited in the above case.

As described above, performing control according to the present embodiment makes it possible to supply the exhaust gas having a relatively high temperature to the catalyst 38 in accordance with the temperature of the turbine 20b under the low-temperature operating condition where the temperature of the catalyst 38 is lower than the activation temperature. This makes it easier for the catalyst 38 to keep the activation temperature, and consequently, the exhaust gas purification capability of the catalyst 38 can be maintained.

The first and second embodiments have been described with reference to a case that the opening and closing of the WGV 36 are controlled depending on whether the high turbine temperature condition is established in a situation where the low-temperature operating condition is established. However, the present invention is not limited to the waste-gate valve opening/closing control that is performed depending on whether the above two sets of conditions are established. More specifically, the degree of waste-gate valve opening may be controlled depending on whether the above two sets of conditions are established. For example, if the above two sets of conditions are both established, control may be performed to decrease the opening of the waste-gate valve to an opening smaller than the opening in accordance with the operating state of the internal combustion engine that prevails when the above conditions are established. When the above-described control is performed, an increased amount of gas passes through the turbine. Therefore, the temperature of the exhaust gas flowing into the exhaust gas purification device can be raised although the produced effect is smaller than when the waste-gate valve is fully closed. This makes it possible to inhibit a decrease in the temperature of the exhaust gas purification device under the low-temperature operating condition.

Further, the first and second embodiments, which have been described above, discriminate whether the vehicle speed is lower than the predetermined speed reference value or whether the temperature of the catalyst 38 is not higher than the predetermined activation temperature to determine whether the low-temperature operating condition where the temperature of the catalyst 38 decreases is established. However, in the present invention, the method of determining whether the low-temperature operating condition is established is not limited to the foregoing methods. More specifically, the present invention may determine whether the low-temperature operating condition is established by discriminating for a change in the vehicle speed, that is, a change in the vehicle's running state from a high-speed travel to a low-speed travel.

Moreover, the first and second embodiments have been described above on the assumption that the exhaust gas purification catalyst 38 is used as the exhaust gas purification device. However, the present invention is not limited to the use of an exhaust purification catalyst. For example, a particulate filter capable of capturing and eliminating particulate matter included in the exhaust gas may be used as the exhaust gas purification device.

### Description of symbols

- 10: internal combustion engine
- 12: intake passage
- 14: exhaust passage
- 18: air flow meter
- 20: turbocharger
- 20a: compressor
- 20b: turbine
- 22: turbine temperature sensor
- 26: throttle valve
- 28: intake pressure sensor
- 30: fuel injection valve
- 32: ignition plug
- 34: exhaust bypass passage
- 36: waste gate valve (WGV)
- 38: exhaust gas purification catalyst
- 40: exhaust gas temperature sensor
- 42: crank angle sensor
- 50: electronic control unit (ECU)
- 52: accelerator opening sensor
- 54: vehicle speed sensor

## Claims

1. A control apparatus for an internal combustion engine with a supercharger, the control apparatus comprising:
a turbocharger having a turbine that operates by exhaust energy and is installed in an exhaust passage;
an exhaust bypass passage that branches off from the exhaust passage at an upstream location of the turbine and merges into the exhaust passage at a downstream location of the turbine;
a waste gate valve capable of selectively opening and closing the exhaust bypass passage;
an exhaust gas purification device that is disposed in the exhaust passage at a downstream location of the downstream location;
low-temperature operating condition determination means for determining whether a low-temperature operating condition is established to decrease the temperature of the exhaust gas purification device;
high turbine temperature condition determination means for determining whether a high turbine temperature condition is established so that the temperature of exhaust gas is higher at the downstream location when the exhaust gas passes through the turbine than when the exhaust gas passes through the exhaust bypass passage; and
waste gate valve opening control means for controlling the degree of opening of the waste gate valve depending on whether the high turbine temperature condition is established when the low-temperature operating condition is established.

2. The control apparatus for the internal combustion engine with the supercharger according to claim 1,
wherein the waste gate valve opening control means closes the waste gate valve when the low-temperature operating condition and the high turbine temperature condition are established, and opens the waste gate valve when the low-temperature operating condition is established and the high turbine temperature condition is not established.

3. The control apparatus for the internal combustion engine with the supercharger according to claim 1,
wherein the waste gate valve opening control means basically performs normally-open control to open the waste gate valve under a normal condition and close the waste gate valve when a high output request is issued to the internal combustion engine, and closes the waste gate valve when the low-temperature operating condition and the high turbine temperature condition are established.

4. The control apparatus for the internal combustion engine with the supercharger according to any one of claims 1 to 3,
wherein, when the speed of a vehicle in which the internal combustion engine is mounted is lower than a predetermined speed reference value, the low-temperature operating condition determination means determines that the low-temperature operating condition is established.

5. The control apparatus for the internal combustion engine with the supercharger according to any one of claims 1 to 3,
wherein the exhaust gas purification device is an exhaust gas purification catalyst, and
wherein, when the temperature of the exhaust purification catalyst is not higher than a predetermined activation temperature, the low-temperature operating condition determination means determines that the low-temperature operating condition is established.
